# EUROPÄISCHE PATENTSCHRIFT

(11) **EP 3 055 065 B1**
(45) Veröffentlichungstag und Bekanntmachung des Hinweises auf die Patenterteilung: **19.06.2019**
(21) Anmeldenummer: 14799657.3
(22) Anmeldetag: 07.10.2014
(51) Int. Cl.: B01L 3/00, F16K 99/00

(54) **MIKROREAKTORSYSTEM**
MICROREACTOR
MICRORÉACTEUR

(30) Priorität: 07.10.2013 DE 102013016521
(43) Veröffentlichungstag der Anmeldung: 17.08.2016
(73) Patentinhaber: M2p-labs GmbH, 52499 Baesweiler (DE)
(72) Erfinder: KENSY, Frank, 50677 Köln (DE); FRISCHE, Niklas, 52511 Geilenkirchen (DE); MÜLLER, Carsten, 52134 Herzogenrath (DE)
(74) Vertreter: Castell, Klaus
(86) Internationale Anmeldenummer: PCT/DE2014/000487
(87) Internationale Veröffentlichungsnummer: WO 2015/051776

(56) Entgegenhaltungen:
- EP-A1- 1 331 538
- WO-A2-2004/034028
- US-A1- 2003 234 376

## Beschreibung

Die Erfindung betrifft ein Mikroreaktorsystem mit einer Membran und einem darunter angeordneten Durchlass zu einer Reaktionskammer oder einem Reaktor, der von einer Fläche umgeben ist, die mit der Membran eine Fluid-Leitung bildet, und eine Verwendung eines derartigen Mikroreaktorsystems.

Insbesondere betrifft die Erfindung eine Vorrichtung zur individuellen Zudosierung oder Abfuhr von kleinen Mengen an Flüssigkeiten oder Gasen in Mikroreaktoren und Mikroreaktorenarrays, wie z.B. Mikrotiterplatten. Weiterführend beschreibt die Erfindung ein Gesamtsystem zur einfachen Realisierung eines Flüssigkeits- oder Gastransports innerhalb eines Mikroreaktorenarrays.

Ein derartiges erfindungsgemäßes Array kann aus einer aktorischen Anschlussleiste, dem Mikroreaktorenarray mit integriertem Mikrofluidik-Chip, einer Abdeckung des Arrays und einer Verspannvorrichtung bestehen. Dabei soll das System sehr einfach handhabbar sein und es sollen keine aufwendigen Schlauchverbindungen manuell zu verbinden sein. Der Mikroreaktorenarray mit integriertem Mikrofluidik-Chip wird einfach eingesetzt, verspannt und danach direkt betrieben. Die Aktorik kann selbstjustierend ausgeführt sein und bedarf dann keiner manuellen Eingriffe. Der Mikrofluidik-Chip besteht aus Ventilen, die aus einem Kugelsegment mit einer konzentrischen Liniendichtung und einer flexiblen Membran ausgeführt sind. Mikrokanäle münden in das Zentrum des Ventils und auf den Umfang des Kugelsegments. Die flexible Membran ist über eine Aktorik bewegbar und kann verschlossen und geöffnet werden, so dass mindestens zwischen zwei Kanälen ein Flüssigkeits- oder Gastransport kontrolliert werden kann.

In der Biotechnologie sind Mikrotiterplatten zur Testdurchführung sehr verbreitet. Mittels herkömmlicher Titerplatten lassen sich Mikroreaktorenarrays von bis zu 6, 24, 48, 96, 384 oder gar 1536 einzelnen Mikroreaktoren realisieren. So wie die Anzahl der Mikroreaktoren stark variiert, kann auch das Volumen der einzelnen Reaktoren unterschiedlich sein. Während schon bei Maßstäben unter 10 ml von Mikroreaktoren gesprochen wird, kann eine weitere Reduzierung des Volumens auf unter 1 ml, unter 500 µl, unter 100 µl oder gar unter 10 µl einige Vorteile mit sich bringen. Das durch die Volumenreduktion erhöhte Oberflächen-VolumenVerhältnis wird größer und damit ein Sauerstoffeintrag in die Reaktionslösung durch einfache Diffusion einfacher. Die Mikroreaktorenarrays können bis zur Beendigung der Reaktion kontinuierlich geschüttelt werden. Die individuelle Zudosierung erlaubt die Durchführung unterschiedlicher Versuche in jedem einzelnen Reaktor. Die Erfindung eignet sich insbesondere zur Automatisierung von Screening-Versuchen in einer Fed-batch Betriebsweise, einer kontinuierlichen Betriebsweise und/oder mit pH-Regelung. Sie betrifft im Besonderen mikrobielle, Zellkultur-, biochemische, enzymatische und chemische Reaktionen. Die Erfindung erlaubt einen sterilen, aseptischen oder monoseptischen Betrieb.

Als Stellgrößen für die Regelung der Zudosierung können Prozessparameter wie z.B. pH-Wert, gelöster Sauerstoff-, gelöster Kohlendioxid, Biomassen-, Edukt- und Produktkonzentrationen oder Temperatur verwendet werden. Insbesondere eignet sich im Zusammenhang mit der Erfindung eine nicht-invasive Erfassung der Prozessparameter durch optische oder elektrische Messmethoden durch den für elektromagnetische Strahlung durchlässigen Boden.

Gerade bei biokatalytischen Systemen ist der Bedarf an vielen parallelen Versuchen im Mikrolitermaßstab besonders hoch, da solche Prozesse im Allgemeinen relativ langsam ablaufen und gerade in der Entwicklungsphase teurer als vergleichbare chemische Prozesse sind. Daher besteht die Notwendigkeit, Mikrobioreaktoren zu entwickeln, die auf kleinstem Raum eine geeignete Umgebung für die biologische Kultivierung und biokatalytische Reaktionen liefern. Als wichtige Voraussetzungen für geeignete Betriebsbedingungen sind hierbei zwei Kriterien hervorzuheben: die Möglichkeit die entsprechenden Versuche unter sterilen oder monoseptischen Bedingungen durchzuführen und die Gewährleistung eines für die biologische Kultur oder das biokatalytische Reaktionssystem geeigneten und ausreichenden Stofftransfers (flüssigflüssig, flüssig-gas, fest-flüssig, fest-gas).

Zum Screening von biologischen Systemen werden die einzelnen Reaktionskammern befüllt, angeimpft und auf einem Rotationsschüttler inkubiert. Durch die Schüttelbewegung wird der Eintrag von Sauerstoff in die Reaktionsflüssigkeiten verbessert und eine Durchmischung der Reaktionsflüssigkeiten erreicht. Um das System steril zu halten werden die Mikrotiterplatten durch eine luftpermeable Membran (Porengröße < 0,2 µm) oder luftdichte Folie oder eine Deckelkonstruktion abgedeckt oder offen in steriler Umgebung kultiviert.

Zur Durchführung der unterschiedlichen biokatalytischen Reaktionen ist es vielfach erforderlich, während des laufenden Versuches verschiedene Fluide (inkl. Gase) der laufenden Reaktion hinzuzuführen. Besonders hervorzuheben sind hierbei die Zufuhr von pH-Stellmitteln (Laugen und Säuren) zur pH-Titrierung der laufenden Reaktion und die Zufuhr von Substraten. Erst die Zufuhr von Substraten während des Prozesses ermöglicht die Durchführung von geregelten Batch, Fed-batch und kontinuierlichen Prozessen. Diese Betriebsmodi sind besonders wichtig für ein flexibles und erfolgreiches biologisches Screening und eine weitergehende Verfahrensentwicklung.

Das Einbringen der Sensoren für die Überwachung der Kultivierungsparameter stellt dabei weniger ein Problem dar, als der Flüssigkeitstransport zu den einzelnen Kultivierungswells.

In der Fed-Batch Applikation der Mikrofluidik liegt das Hauptaugenmerk auf dem kontrollierten, sterilen Flüssigkeitstransport, der im ein- bis zweistelligen Nanoliter-Bereich liegt. Um dies erreichen zu können, wurden bisher viele Arten von Mikro-Ventilen eingesetzt, wovon pneumatische Membran-Ventile durch ihre schnelle Ansprechzeit und hohe Druckbeaufschlagung am vielversprechendsten sind. Diese können in einem einzelnen Fertigungsschritt direkt im Chip integriert und somit sterilisiert werden. Eine weitere Möglichkeit ist die Nutzung von piezoelektrischen Aktoren, die jedoch durch ihre größen-abhängige Kraft und Stellwege nur in weniger komplexen Fluidkanälen Anwendung finden.

Die existierenden mikrofluidischen Ansätze zum Transport und zur Steuerung kleinster Flüssigkeitsmengen in Mikroreaktoren weisen vor allem den Mangel auf, dass sie keinen sterilen Verschluss der Mikroreaktorenarrays durch eine Membran oder einen Deckel erlauben und kein Zudosieren oder Abführen von Flüssigkeiten während des kontinuierlichen Schüttelns der Mikroreaktorenarrays zur Durchmischung der Reaktionsflüssigkeiten und zur Einstellung ausreichender Stofftransferraten.

Die EP-A-1331538, die US2003/0234376 und die WO2004/034028 zeigen gattungsgemäße Mikroreaktorenarrays. Dies Arrays bieten aber insbesondere bei Druckschwankungen nur eine unzuverlässige Abdichtung.

Ausgehend von diesem Stand der Technik liegt der Erfindung die Aufgabe zu Grunde, ein Mikroreaktorsystem für die Leitung von Flüssigkeiten und Gasen weiterzuentwickeln.

Diese Aufgabe wird mit einem Mikroreaktorsystem mit den Merkmalen des Patentanspruchs 1 gelöst.

Vorteilhafte Weiterbildungen sind Gegenstand der Unteransprüche.

Außerdem kann beispielsweise die Membran zwischen einem die Reaktoren aufweisenden Chip und einem Tablar angeordnet sein.

Auf der Membran kann selbstzentrierend eine Aktorik angeordnet sein.

Das System kann sich auf einer Auflagefläche selbstzentrieren und jeder Reaktor kann mehrere Durchlässe aufweisen. Das Mikroreaktorsystem kann Sensoren aufweisen, die Parameter in den Reaktoren messen, um auf eine Aktorik einzuwirken.

An einer Seite des Reaktors kann die Membran angeordnet sein und an der gegenüberliegenden Seite ein Sensor.

Vorteilhaft ist es, wenn das Mikroreaktorsystem ein optisches System aufweist.

Insbesondere ist es vorteilhaft, wenn es einen Schüttler zum Bewegen des Reaktors aufweist.

Die Ventile können am Rande des mikrofluidischen Systems angeordnet sein und einen optischen Zugang zu den Reaktionskammern erlauben.

Weiterhin ist es vorteilhaft, wenn in dem Reservoir und/oder dem Reaktionsgefäß chemische oder elektrische Sensoren eingebracht sind und ausgelesen werden können.

Vorteilhaft ist es, wenn die Reaktionskammer und/oder das Reservoir nachfüllbar sind.

Vorteilhaft ist es weiterhin, wenn die Reaktionskammer durch ein Ein-Wege-Ventil gespeist wird.

Das Mikroreaktorsystem kann eine Vielzahl von Reaktionskammern verbinden.

Das mikrofluidische System kann mit einer Spannvorrichtung in Position gebracht und abgedichtet werden.

Es kann aus einer aktorischen Anschlussleiste, einer Mikrotiterplatte, einem Begasungssystem und einer Verspannvorrichtung bestehen.

Dabei können eine Vielzahl von chemischen, biochemischen oder biologischen Reaktionen in Reaktionskammern gesteuert oder geregelt werden.

Vorteilhaft ist es, wenn das Mikroreaktorsystem einen Schüttler zum Bewegen des Reaktors aufweist.

Das mikrofluidische System kann mit Hydraulik aktuiert werden und es kann mit mechanischen oder elektromagnetischen Bauteilen aktuiert werden.

Eine vorteilhafte Verwendung eines derartigen Mikroreaktorsystems ist das Pumpen von Fluid aus einem Reaktor in einen Reaktor eines Mikroreaktorenarrays.

Ferner kann die Reaktionskammer steril oder aseptisch betrieben werden.

Derartige Mikroreaktorsysteme können in unterschiedlichen Ausführungsformen die folgenden Aufgabenlösen: Zu- und Abfuhr von Flüssigkeiten oder Gasen in Fluidmengen im Nano- oder Pikoliterbereich, kontrollierter Flüssigkeits- oder Gastransport durch verschaltete Membranventile, "Plug and Play" Anbindung der mikrofluidischen Reaktoren an die Aktorik, Online Messung von Prozessparametern, Regelung der Prozessparameter in den Mikroreaktoren durch Flüssigkeits- oder Gastransport in die und aus den Mikroreaktoren (innerhalb eines Regelkreises),Steriler oder mono-septischer Betrieb der Mikroreaktoren, Realisierung von vergleichbaren verfahrenstechnischen Betriebsbedingungen (kLa-Wert, OTR, emax, etc.) wie im Labor- und Produktionsmaßstab, Fertigbarkeit und Verwendung als Einwegartikel, Quantifizierung der dosierten Volumina.

Dafür ist eine Kombination von Mikroreaktorenarrays mit entsprechenden Zu- und Abläufen unterschiedlicher Fluidkanäle, einem so genannten Fluidsystems vorteilhaft. Das Fluidsystem kann aus einer mikrostrukturierten Platte bestehen, die für die Kontrolle der Flüssigkeits- und Gasströme Membranventile mit Liniendichtungen verwendet. Die Membranventile können dabei die Form eines konkaven Kugelsegments mit einer konzentrisch angeordneten Liniendichtung (geschnittener Torus, Polygon oder Steg beliebiger Form) haben und eine Membran, die aktuierbar ist, um das Ventil zu schalten (öffnen und schließen der Verbindung zwischen zwei Kanälen) besitzen. Die mikrofluidische Platte kann den Boden eines Mikroreaktor Arrays oder einer Mikrotiterplatte ausbilden und mit diesem verbunden sein. Die Membran-ventile können so angeordnet sein, dass sie jeweils am Rande der Platte liegen und den mittleren Bereich des Bodens für Messungen in den Mikroreaktoren frei machen (freier Zugang zu den Mikroreaktoren). Der Mikroreaktor Array ist vorzugsweise oben mit einer gasdurchlässigen Membran oder Abdeckung verschlossen. Des Weiteren kann die mikrofluidische Platte mit dem Mikroreaktor Array einfach auf einem Tablar mit integrierter Aktorik platziert werden, ohne dass einzelne Aktorik-Einheiten verbunden werden müssen. Der Mikroreaktor-Array kann selbst-justierend ausgeführt sein und sich über der installierten Aktorik von selbst zentrieren (z.B. über Arretierungsstifte). Durch einfache Kraftaufbringung von oben auf den Mikroreaktor Array, kann das System mit der Aktorik formschlüssig verbunden werden (pneumatisch dicht oder mechanisch ohne Schlupf). Des Weiteren kann der Mikroreaktor Array auf einem Schüttler installiert und/oder von einer Inkubationskammer umgeben sein. Vom Boden des Mikroreaktor Array her können Sensorsignale (pH, pO₂, pCO₂, Biomasse, Fluoreszenz, Glucose, Vitalität, und weitere Prozessgrößen) aus den Mikroreaktoren detektiert werden. Die Sensorsignale können dann durch einen Computer oder Mikroprozessor in einem Regelkreis verarbeitet werden und je nach Reglereinstellung können Volumina zur Dosierung in die Mikroreaktoren berechnet werden. Diese Volumina werden dann durch das beschriebene Fluidsystem in die einzelnen Mikroreaktoren des Arrays gefördert. Jeder Sensor-Messgröße kann ein spezielles Reservoir zugeordnet sein, aus dem das Volumen gefördert wird. Dabei können für die pH-Regelung Säuren und/oder Basen und für das Biomasse-Wachstum und die Produkt-Herstellung Substrate wie Glukose oder Glyzerin in den Reservoiren vorgelegt werden.

Der Mikroreaktor Array kann des Weiteren so ausgelegt sein, dass die Abdeckung der Reaktoren individuell reversibel zu öffnen ist und man entweder manuell oder mit einem Pipettierroboter Zugang zu den einzelnen Mikroreaktoren erhält. Dies kann durch ein Septum oder durch einen Verschluss (wie z.B. einen Stopfen) realisiert werden. Dadurch ist gegeben, dass man mittels einer Pipette Volumina aus den Mikroreaktoren abführen kann (z.B. für eine Probennahme) sowie auch umgekehrt Volumina zudosieren kann. Es kann nötig sein, dass auch Gase von oben in die Mikroreaktoren dosiert werden müssen, z.B. um die Gaskonzentration im Kopfraum der Reaktionskammern zu regeln. In diesem Fall ist vorgesehen, eine weitere Abdeckung auf den Mikroreaktor Array, die ein Begasungssystem enthält, aufzubringen. Das Begasungssystem leitet definierte Gase zu den einzelnen Reaktionskammern. Die Dosierung und Schaltung der Gase über das Begasungssystem erfolgt durch externe Ventile. Das Begasungssystem kann wie das System zur Einbringung von Flüssigkeiten ausgebildet sein. Dabei kann an der Oberseite des Mikroreaktorsystems ein Begasungssystem und an der Unterseite ein Flüssigkeitszuführ- und -abführsystem angeordnet sein.

Die Steuerung der einzelnen Membranventile kann durch unterschiedliche Verfahren realisiert werden. Angedacht sind hier unter anderem pneumatische Steuerkanäle, aber auch optisch, thermisch, hydraulische, elektromechanisch oder magnetisch aktuierte Schalter können zur Fluidkanalsteuerung verwendet werden. Um eine Diffusion der Reaktionsmedien innerhalb des Reaktors zurück in die Fluidkanäle zu minimieren, können zusätzlich einfache passive Ventile (z.B. Lymphventile oder Venenklappen-Ventile) am Auslass eines Kanals in die Reaktionskammer realisiert werden.

Das Mikroreaktorsystem kann dazu verwendet werden, in jeden Mikroreaktor eines Arrays mindestens zwei verschiedene Nährlösungen mit einem minimalen Fluss von wenigen nl (1-1000 nl) zu dosieren und so eine kontrollierte Flüssigkeits- oder Gaszufuhr in einen Mikroreaktor zu erlauben. Dies wird erleichtert durch die Nutzung einer elastischen Membran (PE, PU, PTFE), welche an einen mikrofluidischen Chip (PS, PC, PP, PET, PMMA, PL, PEEK, PTFE) gefügt wurde. Die Membran ist im hohen Maße gasundurchlässig und dazu hochflexibel, so dass die Ventile des mikrofluidischen Chips leckagefrei abgedichtet werden. Dies wird durch die hier vorgestellte Bauform des Membranventils als konkaves Kugelsegment mit konzentrischer Linienführung und mindestens zwei Kanalzugängen begünstigt. Die Schaltabfolge der Ventile kann so ausgelegt sein, dass immer ein konstantes Volumen, welches nicht vom Medium abhängig ist, gefördert wird. Die Vorteile dieser Materialkombination liegen neben der Funktionalität in der Möglichkeit einer kostengünstigen Serienfertigung.

Des Weiteren können die Prozessparameter in den Mikroreaktoren durch Sensorik kontinuierlich überwacht werden. Die Sensorsignale können für einen gesteuerten oder geregelten Zulauf von Flüssigkeiten oder Gasen über das Fluidsystem in die Mikroreaktoren verwendet werden. Die Verwendung einer Abdeckung auf den Mikroreaktoren erlaubt es, sterile oder mono-septische Prozesse zu betreiben. Dazu werden alle verwendeten Materialien zuvor thermisch oder durch Strahlung sterilisiert. Der gesamte Mikroreaktorarray mit dem mikrofluidischen Chip (Boden) ist als Einweg-Artikel ausgelegt und kann ohne große Vorbereitung direkt verwendet werden und nachher entsorgt werden.

Eine besondere Ausführungsform sieht die einfache Einspannung des Mikroreaktor Array in einem Gerät durch Kraftwirkung von oben vor. Dadurch wird der Mikroreaktor Array auf die Aktorik gedrückt, welche sich vorzugsweise selbst ausrichtet und auf dem Schütteltablar in Position gehalten wird. Der Mikroreaktorarray kann mit einfachen Handgriffen in der auf dem Schütteltablar integrierten Einspannung platziert werden und wird dort automatisch durch Arretierungslöcher des mikrofluidischen Chips und der dazu passenden Arretierungsstifte auf dem Schütteltablar ausgerichtet. Dadurch werden vorzugsweise alle Ventile des mikrofluidischen Chips automatisch über der dazugehörigen Aktorik positioniert. Der Chip und das Tablar werden durch eine elastische Dichtung (z.B. PDMS) voneinander getrennt. Die luftdichte Einspannung erfolgt automatisch durch eine pneumatische Vorrichtung. Nach Installation des Mikroreaktorarrays kann der Array direkt als Mikroreaktionssystem genutzt werden mit individueller Prozessparameter-Regelung (z.B. pH- Wert) und mit individueller, kontinuierlicher Zu- und Abfuhr von Reaktionspartnern (z.B. Substraten in der Fermentation).

Es wurde ein Gesamtsystem gestaltet welches die folgenden Eigenschaften aufweist: Mikroreaktor Array von 2-2000 Mikroreaktoren, mikrofluidisches System mit Membranventilen, online Messung von Prozessparametern, individuelle pH Regelung, individuelle Zudosierung von Reaktionspartnern, individuelle Regelung der Gaskonzentrationen in den Reaktionskammern durch Gaszuleitung über ein Begasungssystem von oben, sterile oder mono-septische Reaktionsführung, "Plug and Play" Installation und Verwendung, geregelte Reaktionsführung in einem Inkubator mit Temperatur, Feuchte, O₂, N₂, CO₂-Regelung, einfache Skalierbarkeit durch Einhaltung von verfahrenstechnischen Kenngrößen (z.B. kLa-Wert), durch Verwendung eines Schüttlers, Einweg-Artikel und Quantifizierung der dosierten Volumina.

Die vorgenannten sowie beanspruchten und in den Ausführungsbeispielen beschriebenen erfindungsgemäß zu verwendenden Bauteile unterliegen in ihrer Größe, Form, Gestaltung, Materialauswahl und technischen Konzeptionen keinen besonderen Ausnahmebedingungen, so dass die in dem Anwendungsgebiet bekannten Auswahlkriterien uneingeschränkt Anwendung finden können.

Weitere Einzelheiten, Merkmale und Vorteile des Gegenstandes der Erfindung ergeben sich aus den Unteransprüchen sowie aus der nachfolgenden Beschreibung der zugehörigen Zeichnungen, in der - beispielhaft - ein bevorzugte Ausführungsbeispiele der Erfindung dargestellt sind. Es zeigt
- Figur 1: einen Schnitt durch ein Ventil des Mikroreaktorsystems mit geöffnetem Durchlass,
- Figur 2: einen weiteren Schnitt durch das in Figur 1 gezeigte Mikroreaktorsystem mit geschlossenem Durchlass,
- Figur 3: eine Ansicht des Ventils von unten ohne Membran,
- Figur 4: schematisch den Ebenenwechsel innerhalb eines Mikroreaktorenarrays,
- Figur 5: schematisch die Anordnung der Ventile als Multiplexer,
- Figur 6: schematisch eine Pumpe,
- Figur 7: die Platzierung der Ventile,
- Figur 8: die Zentrierung der Ventile,
- Figur 9: einen Chip an einer Mikrotiterplatte,
- Figur 10: die Einspannung einer Mikrotiterplatte,
- Figur 11: einen Schnitt durch eine eingespannte Mikrotiterplatte,
- Figur 12: die Unteransicht einer Begasungsabdeckung,
- Figur 13: eine Draufsicht auf eine Begasungsabdeckung,
- Figur 14: schematisch eine Pumpabfolge mit einem Auslassventil am Beispiel einer pH-Regelung und
- Figur 15: schematisch eine Pumpabfolge mit mehreren Ventilen.

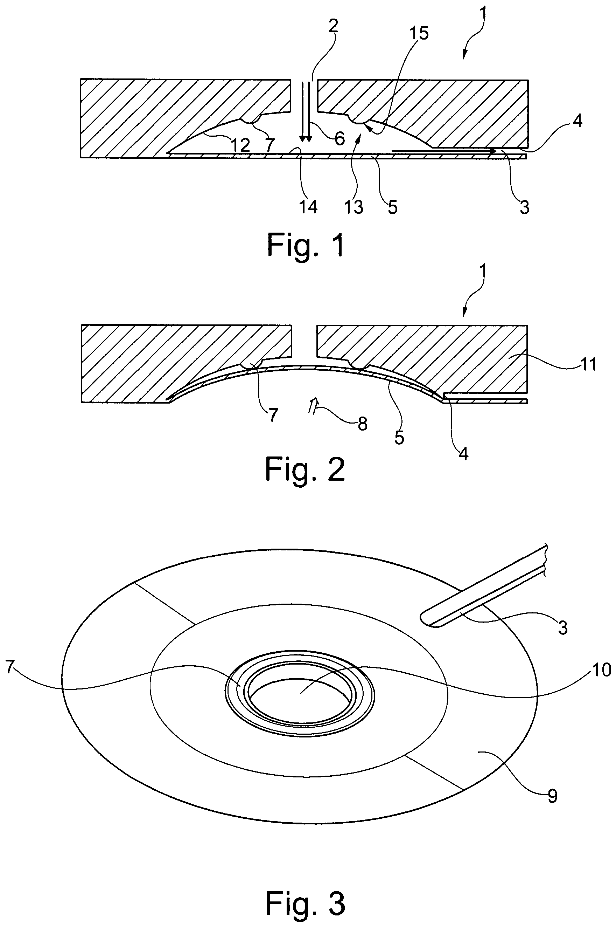

Das in den Figuren 1 bis 3 gezeigte Ventil 1 eines Mikroreaktorsystems hat einen oben gelegenen Flüssigkeitseinlas, der als Durchlass 2 dient, und orthogonal dazu einen Auslasskanal 3 auf der Unterseite 4, welche mit einer dünnen Membran 5 gedeckelt ist. Für eine bessere Abdichtung ist konzentrisch um den Durchlass 2 für eine Flüssigkeit 6 als Liniendichtung eine ringförmige Erhebung 7 angebracht. Bei einer in Figur 2 gezeigten Beaufschlagung der Membran 5 mit pneumatischem oder mechanischem Druck 8 legt sich die Membran 5 an die Liniendichtung an und dichtet somit das Ventil 1 ab.

Die Figur 3 zeigt, dass das Ventil 1 einen runden Durchmesser hat und als konkaves Kugelsegment 9 mit einer maximalen Tiefe im Zentrum 10 ausgelegt sind. Zentrisch ist der als Flüssigkeitseinlass dienende Durchlass 2 angelegt, welcher die Flüssigkeit 6 von oben in das Ventil 1 fördert. Um den Durchlass 2 herum ist eine hervorstehende Struktur angelegt, welche beispielsweise als ringförmige Erhebung 7 als Liniendichtung fungiert. Hier kann sich die Membran 5 leckagefrei anlegen und somit das Ventil 1 abdichten. Der Ventilauslass 3 ist am Rand des Ventils 1 angelegt und führt direkt über in einen mikrofluidischen Kanal 10. Seitlich neben dem Auslass 3 liegt die Membran an der Unterseite 4 des Grundkörpers 11 des Ventils 1 an. Somit ist der Durchlass von einer Fläche 12 umgeben, die mit der Membran 5 eine Fluidleitung 13 bildet, und zur Unterstützung der Abdichtung eine ringförmige Erhebung 7 aufweist.

Die Membran hat im Ausführungsbeispiel eine dem Grundkörper 11 zugewandte ebene Seite 14 und dieser Seite gegenüberliegend ist ringförmige Erhebung 7 im Schnitt bogenförmig ausgebildet, um mit der bogenförmigen Oberfläche 15 einerseits eine ausreichende Anlagefläche und andererseits einen ausreichenden Anpressdruck zu bieten.

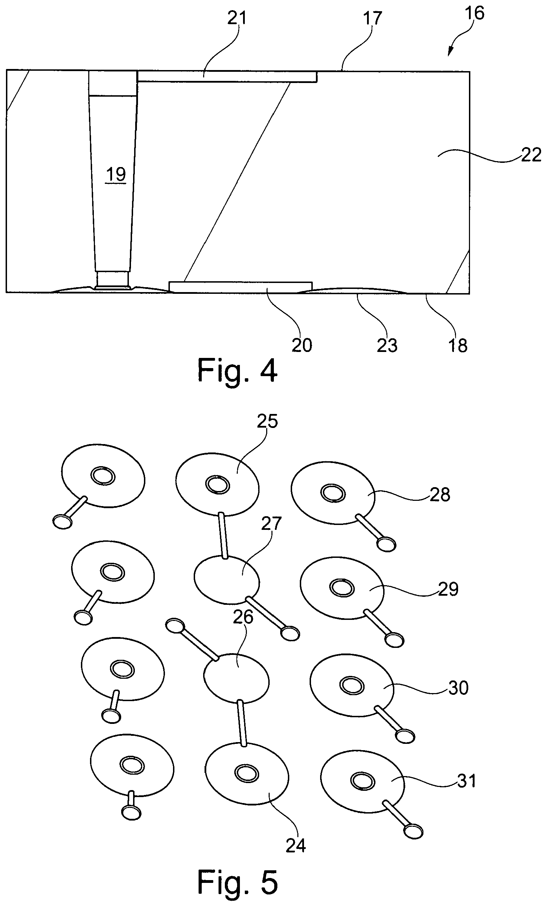

Die besondere Funktionsweise der Ventile 1 kommt bei einem Ebenenwechsel der Flüssigkeit von der Ober- zur Unterseite eines als mikrofluidischer Chip ausgebildeten Mikroreaktorenarrays 16 besonders zur Geltung. Das bedeutet, dass bei Verwendung der beschriebenen Ventile 1 Netzwerke von Mikrokanälen auf beiden Seiten 17, 18 des Chips vorhanden sind und so die Fluide von Reservoiren über die Ventile in Reaktionskammern leiten. In Figur 4 ist die mikrofluidisch strukturierte Platte 22 des Mikroreaktorenarrays 16 mit einem Durchlass 19 ausgebildet, der von einem unteren Kanal 20 zu einem oberen Kanal 21 führt, und die mit der Membran 23 abgedeckt ist.

Die in Figur 5 gezeigte Anordnung der Ventile ist so ausgelegt, dass immer ein Einlassventil (24, 25), ein Pumpventil (26, 27) und vier Auslassventile (28, 29, 30, 31) hintereinander geschaltet werden. Dadurch entsteht ein Multiplexer, so dass wie hier z.B. bis zu vier Reaktionskammern (well) durch ein Reservoir versorgt werden können.

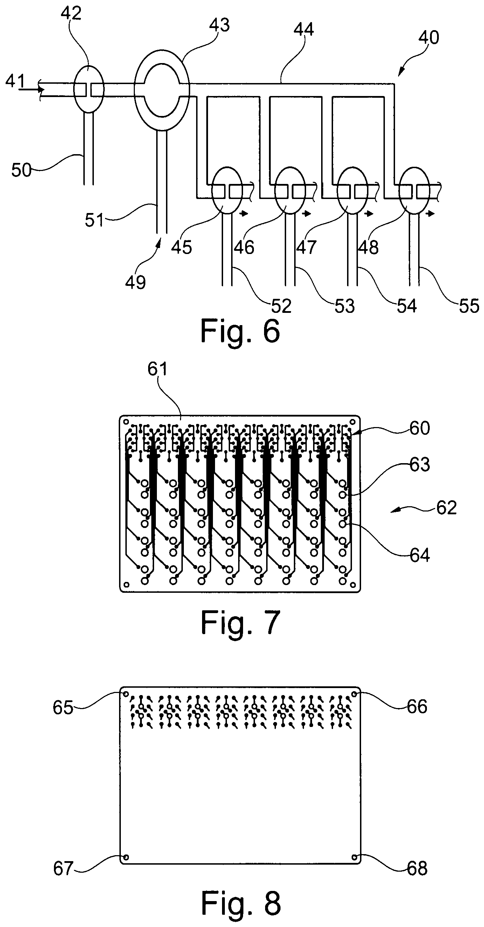

Die Figur 6 zeigt eine Pumpe 40, mit der z.B. eine von einem Reservoir kommende Flüssigkeit 41 durch ein Einlassventil 42 in eine Pumpkammer 43 gelangt. Damit steht die Flüssigkeit bei geschlossenem Einlassventil 42 unter Druck, um über ein Fluidsystem 44 je nach Anforderung durch Öffnen eines der Ventile 45 bis 48 in ein Well (nicht gezeigt) gefördert zu werden. Dafür werden die Ventile mittels einer Aktorik bzw. aktorischen Anschlussleiste 49 aus Stößeln oder pneumatischen Leitungen 50 bis 55 bedient.

Die Figuren 7 und 8 zeigen eine vorteilhafte Platzierung der Ventile 60 am obersten Rand 61 des mikrofluidischen Chips 62, direkt unterhalb der Reservoirs (nicht gezeigt). Dies gewährleistet eine freie optische Fläche unter den Reaktionskammern für die optische Auslesung der Signale beispielsweise mit Optoden 63 und 64. Die genaue Zentrierung der Ventile 60 erfolgt über Arretierungslöcher 65 bis 68, in die, die auf einer Verteilerleiste 90 vorgesehenen Stifte 95 gesteckt werden. Dies gewährleistet eine punktgenaue Ausrichtung der Ventile.

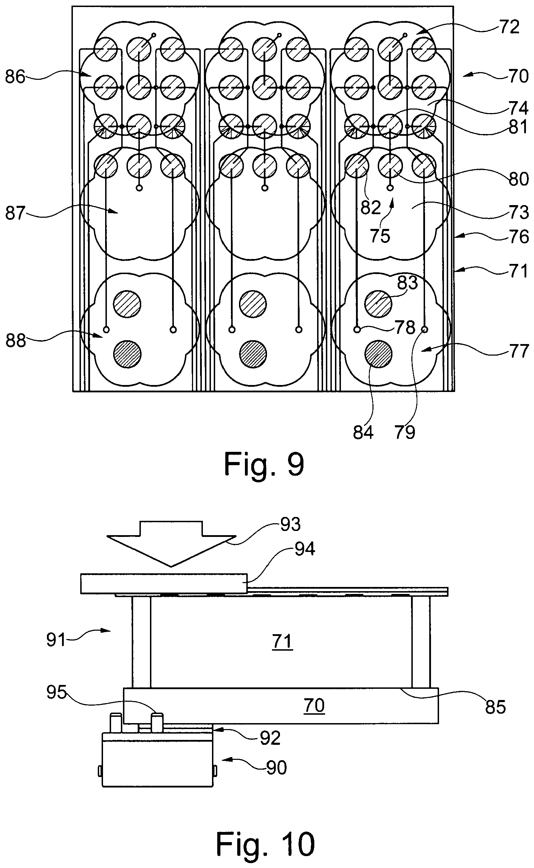

Die Figur 9 zeigt, wie ein Chip 70 so an eine Miktotiterplatte 71 integriert werden kann, dass die Ventile 72 unterhalb der Reservoire 73 liegen. Hier decken die Ventile 72 jeweils zwei Reservoire 73, 74 ab. In jedem Reservoir liegt mindestens ein Einlass 75, der mit Fluidkanälen 76 und einem Netzwerk an Ventilen 72 verbunden ist. Jede Reaktionskammer 77 hat mindestens einen Auslass 78, 79, damit mindestens ein Fluid zudosiert werden kann. Der Fluidtransport findet statt ausgehend von dem Reservoir 73, 74 über den Einlass 75 in das Einlassventil 80, die Pumpkammer 81, das Auslassventil 82, über den Auslass 78, um dann in der Reaktionskammer 77 zu münden. Optoden 83, 84 in den Reaktionskammern 77 messen als Sensoren die Prozessparameter in den Reaktionskammern 77 und können über den Boden 85 der Mikrotiterplatte 71 hinweg ausgelesen werden. Die Figur 9 zeigt einen Ausschnitt mit zwei Reservoirreihen 86, 87 und einer Reaktionskammerreihe 88, die auch als Wellreihe bezeichnet wird. In einem geschlossenen Regelkreis können dann die Prozessparameter in den Reaktionskammern durch Zufuhr von Fluiden geregelt werden.

Die Mikrotiterplatte 71 muss luftdicht mit einer pneumatischen Ansteuerung 90 verbunden werden. Hierzu wird der Boden 85 der Mikrotiterplatte 71, den der mikrofluidische Chip 70 bildet, auf der Ventilseite 91 auf eine Dichtung 92 gestellt. Durch permanente Krafteinwirkung 93 auf den auf der Mikrotiterplatte 71 fixierten Einspannungsdeckel 94, werden die Mikrotiterplatte 71 und der mikrofluidische Chip 70 mit der pneumatischen Ansteuerung 90 verbunden. Der Einspannungsdeckel 94 weist einen pneumatischen Vordruckauslass und eine Dichtung auf.

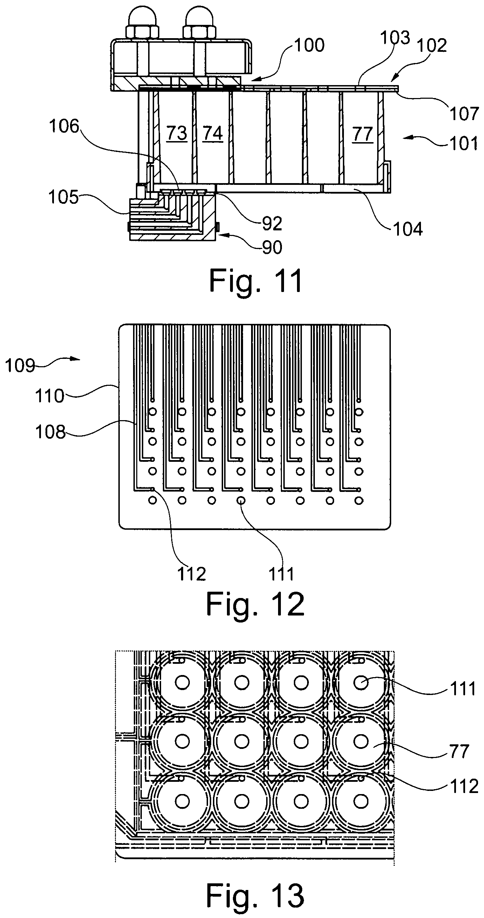

Das Gesamtsystem für die Funktion der mikrofluidischen Mikrotiterplatte ist in Figur 11 gezeigt und besteht aus der luftdichten Einspannung 100 der Mikrotiterplatte 101, welche über eine Dichtung 92 mit der Verteilerleiste 90 verbunden ist. Retraktionsfedern (nicht gezeigt) sorgen dafür, dass bei Entspannung der Deckel 102 angehoben wird. Der Deckel 102 besitzt mindestens zwei Lufteinlässe 103, die die Mikrotiterplatte 101 bei Bedarf mit Überdruck versorgen, um Flüssigkeit in den mikrofluidischen Chip 104 zu pressen. Die Verteilerleiste 90 hat für jedes Ventil einen Schlauchanschluss 105, durch den pneumatischer Druck auf die Mikroventile 106 geleitet wird, die den Fluss regeln. Oberhalb der Mikrotiterplatte befindet sich eine Begasungsvorrichtung 107. In diese Vorrichtung sind Kanäle 108 eingearbeitet, die Gase zu den Reaktionskammern 77 leiten und zusätzlich eine Entlüftung haben, um für optimalen Gasaustausch der Reaktionskammern 77 zu sorgen.

Das Begasungssystem 109 mit der Begasungsabdeckung 110 befindet sich oberhalb der Reaktionskammern 77. Das System ist so ausgelegt, dass mindestens ein Begasungskanal 108 mit einem Ausgangsloch 112 für die Begasung in jede Reaktionskammer 77 führt und somit ein individueller Gastransfer zu jeder notwendigen Reaktionskammer 77 möglich ist. Damit können Gaskonzentrationen innerhalb der Reaktionskammern 77 geregelt werden. Das Begasungssystem 109 weist zusätzlich Entlüftungslöcher 111 für den Gasaustausch zwischen den Reaktionskammern 77 und der Umgebung auf.

Bei der Verwendung der Vorrichtung 120 werden die aktiven Ventile 121durch extern geschaltete Druckluft 122 angetrieben. Die Ventile 121 bestehen aus einer Basisschicht 123 mit eingebetteten Fluidkanälen 124. Am Ventilsitz sind die Fluidkanäle durch eine Stufe 125 unterbrochen. Nach oben werden die Kanäle 124 durch eine elastisch verformbare Membran 126 abgeschlossen, die auf die Basisschicht 123 des Mikrofluidchips 127 gefügt wird. Am Ventilsitz 128 ist die Membran 126 nicht an die Basisschicht 123 gefügt, kann sich vom Ventilsitz 128 abheben und einen Fluidstrom ermöglichen, wenn der Pneumatikdruck über der Membran 126 gegenüber dem Druck in der Fluidleitung der Fluidkanäle 124 hinreichend klein ist. Ein erhöhter externer Pneumatikdruck verschließt das Ventil 121. Dadurch kann ein Fluidkanal 124 zwischen einen unter Druck stehenden Reservoir 129 und einem Well 130 in einer Mikrotiterplatte 131 geöffnet und verschlossen werden. Im Well 130 befinden sich pH und DOT Optoden und unter der Membran befindet sich zur Abdichtung der Druckluft 122 eine Silikondichtung 132.

Alle beschriebenen Mikrofluidchips und Mikrotiterplatten können besonders einfach auf einem Schütteltray 133 angeordnet werden, wenn im Tray 133 eines Schüttlers (nicht gezeigt) pneumatische Verbindungen vorgesehen werden.

Dieser am Beispiel des Ventils beschriebene Aufbau kann zur Erhöhung des Anpressdrucks wie die zuvor beschriebenen Einrichtungen eine Ringförmige Erhebeung aufweisen, die an einem derartigen Ventil nicht um einen Durchlass angeordnet ist sondern am Ventilsitz und vorzugsweise konzentrisch zum Ventilsitz, wie in den Figuren 1 bis 3 gezeigt.

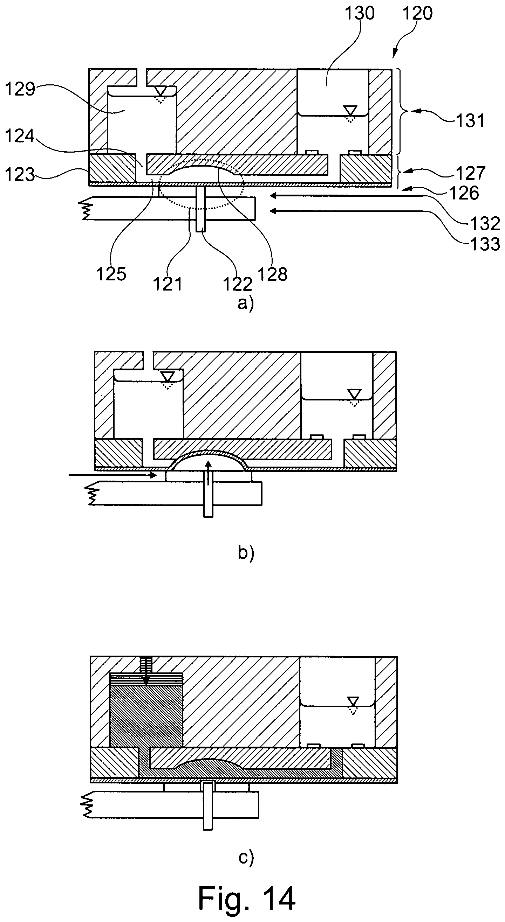

Es gibt dabei zwei Arten der Dosierung: Eine Darstellung der Pumpabfolge bei vorzugsweise zeitgesteuerter pH-Regelung zeigt die Figur 14: a) Vordruck von oben, öffnen von Einlass, Pumpventil, b) Öffnen des Auslassventils (über einen bestimmten Zeitraum = Volumen), c) Schließen aller Ventile.

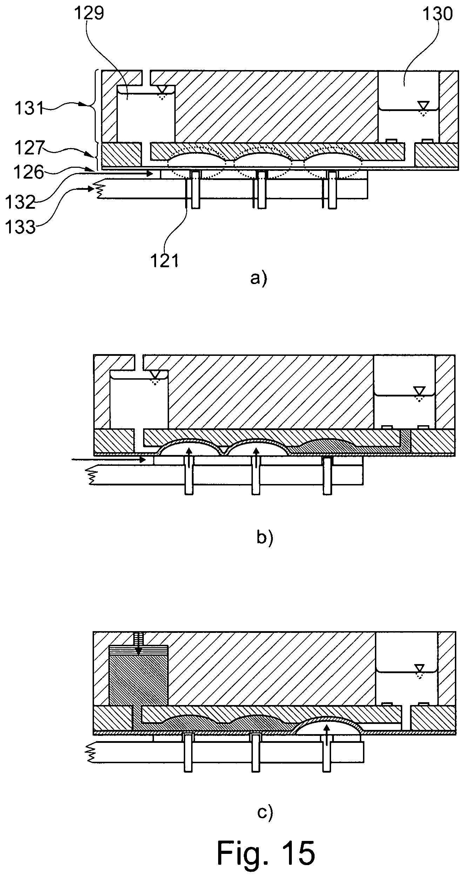

Diese Pumpabfolge kann wie in Figur 15 gezeigt mit mehreren Ventilen oder auch wie in Figur 14 gezeigt vereinfacht nur mit einem Auslassventil umgesetzt werden. Dann wird nur das Auslassventil über einen bestimmten Zeitraum lang geöffnet und somit läuft ein definiertes Volumen in die Reaktionskammer.

Bei der in Figur 15 gezeigten Pumpabfolge bei fed-batch unterscheidet man die folgenden Schritte: a) Vordruck von oben, öffnen von Einlass und Pumpventil, b) Schließen von Einlassventil, c) Öffnen von Auslassventil und Schließen von Pumpventil (definiertes Volumen durch Pumpenhub, mehrfacher Ablauf der Pumpenabfolge).

## Patentansprüche

1. Mikroreaktorsystem mit einer gasundurchlässigen und flexiblen Membran (5) und einem Durchlass (2) zu einer Reaktionskammer oder einem Reaktor, der von einer Fläche (12) umgeben ist, die mit der Membran (5) eine Fluid-Leitung (13) bildet, wobei die Membran (5) eine dem Durchlass (2) zugewandte ebene Seite ausweist und die Fläche (12) eine ringförmige Erhebung (7) aufweist, die um den Durchlass (2) angeordnet ist, um mit einem Auslass (3) ein Ventil (60) zu bilden, ***dadurch gekennzeichnet, dass*** die Erhebung (7) ringförmig mit bogenförmiger Oberfläche (15) als Liniendichtung ausgebildet ist.

2. Mikroreaktorsystem nach Anspruch 1, ***dadurch gekennzeichnet, dass*** der Durchlass (2) eine als Kugelsegment (9) ausgebildete Vertiefung aufweist.

3. Mikroreaktorsystem nach einem der vorhergehenden Ansprüche, ***dadurch gekennzeichnet, dass*** es einen Mikroreaktorenarray (16) aufweist, der von einer Membran (23) abgedeckt ist, wobei mindestens ein Durchlass (19) jeweils zu mindestens einem Reaktor führt.

4. Mikroreaktorsystem nach einem der vorhergehenden Ansprüche, ***dadurch gekennzeichnet, dass*** der Durchlass (19) zwischen zwei Kanälen (20, 21) angeordnet ist.

5. Mikroreaktorsystem nach einem der vorhergehenden Ansprüche, ***dadurch gekennzeichnet, dass*** Reaktorkanäle (20, 21) und mindestens ein Durchlass (19) in einer mikrofluidisch strukturierten Platte (22) angeordnet sind.

6. Mikroreaktorsystem nach einem der vorhergehenden Ansprüche, ***dadurch gekennzeichnet, dass*** es eine Aktorik (49) aufweist, die im Bereich des Durchlasses (22) auf die Membran (23) wirkt.

7. Mikroreaktorsystem nach einem der vorhergehenden Ansprüche, ***dadurch gekennzeichnet, dass*** ein pneumatisches System (90) im Bereich der Öffnungen auf die Membran (23) wirkt.

8. Mikroreaktorsystem nach einem der vorhergehenden Ansprüche, ***dadurch gekennzeichnet, dass*** mehrere Durchlässe (2) derart angeordnet sind, dass mit ihnen eine Pumpfunktion ermöglicht ist, indem eine Pumpenkammer (43) zwischen einem Einlassventil (42) und einem Auslassventil (45 bis 48) angeordnet ist.

9. Mikroreaktorsystem nach einem der vorhergehenden Ansprüche, ***dadurch gekennzeichnet, dass*** die an das Ventil (60) mündende Kanäle in unterschiedlichen Ebenen liegen.

10. Mikroreaktorsystem nach einem der vorhergehenden Ansprüche, ***dadurch gekennzeichnet, dass*** mehrere Ventile (60) miteinander verschaltet sind.

11. Mikroreaktorsystem nach einem der vorhergehenden Ansprüche, ***dadurch gekennzeichnet, dass*** das System mit optisch transparenten Materialien ausgeführt ist.

12. Mikroreaktorsystem nach einem der vorhergehenden Ansprüche, ***dadurch gekennzeichnet, dass*** das Ventil (106) ein Reservoir (73, 74) und ein Reaktionsgefäß (77) verbindet.

13. Mikroreaktorsystem nach einem der vorhergehenden Ansprüche, ***dadurch gekennzeichnet, dass*** das Reservoir (73, 74) druckbeaufschlagt ist.

14. Mikroreaktorsystem nach einem der vorhergehenden Ansprüche, ***dadurch gekennzeichnet, dass*** in die Reaktionskammer mehrere Reservoire (73, 74) münden.

15. Mikroreaktorsystem nach einem der vorhergehenden Ansprüche, ***dadurch gekennzeichnet, dass*** die Reaktionskammer mit einer gasdurchlässigen Abdeckung (102) abgedeckt ist.

16. Mikroreaktorsystem nach einem der vorhergehenden Ansprüche, ***dadurch gekennzeichnet, dass*** das Ventil (24, 25, 26, 27) vor eine Vielzahl weiterer Ventile (28, 29, 30, 31) geschaltet wird und zum Multiplexing genutzt wird.

17. Mikroreaktorsystem nach einem der vorhergehenden Ansprüche, ***dadurch gekennzeichnet, dass*** es aus einer aktorischen Anschlussleiste (49), einer Mikrotiterplatte (71) und einer Verspannvorrichtung (100) besteht.

18. Verwendung eines Mikroreaktorsystems nach einem der vorhergehenden Ansprüche zum Öffnen und Schließen von Verbindungen zwischen Reaktoren (77) eines Mikroreaktorarrays.

## Claims

1. A microreactor system having a gas-impermeable and flexible membrane (5) and a passage (2) to a reaction chamber or a reactor, which is surrounded by an area (12) which forms a fluid line (13) with the membrane (5), wherein the membrane (5) has a planar side facing the passage (2) and the area (12) has an annular elevation (7), which is arranged around the passage (2) so as to form together with an outlet (3) a valve (60), ***characterised in that*** the elevation (7) is annular with an arcuate surface (15) as line seal.

2. The microreactor system according to claim 1, ***characterised in that*** the passage (2) has a depression formed as a ball segment (9).

3. The microreactor system according to either one of the preceding claims, ***characterised in that*** it has a microreactor array (16), which is covered by a membrane (23), wherein at least one passage (19) leads to at least one reactor in each case.

4. The microreactor system according to any one of the preceding claims, ***characterised in that*** the passage (19) is arranged between two channels (20, 21).

5. The microreactor system according to any one of the preceding claims, ***characterised in that*** reactor channels (20, 21) and at least one passage (19) are arranged in a microfluidically structured plate (22).

6. The microreactor system according to any one of the preceding claims, ***characterised in that*** it has an actuator system (49), which acts on the membrane (23) in the region of the passage (22).

7. The microreactor system according to any one of the preceding claims, ***characterised in that*** a pneumatic system (90) acts on the membrane (23) in the region of the openings.

8. The microreactor system according to any one of the preceding claims, ***characterised in that*** a plurality of passages (2) are arranged in such a way that a pump function is enabled therewith **in that** a pump chamber (43) is arranged between an inlet valve (42) and an outlet valve (45 to 48).

9. The microreactor system according to any one of the preceding claims, ***characterised in that*** the channels opening out to the valve (60) lie in different planes.

10. The microreactor system according to any one of the preceding claims, ***characterised in that* a** plurality of valves (60) are connected to one another.

11. The microreactor system according to any one of the preceding claims, ***characterised in that*** the system is realised using optically transparent materials.

12. The microreactor system according to any one of the preceding claims, ***characterised in that*** the valve (106) connects a reservoir (73, 74) and a reaction vessel (77).

13. The microreactor system according to any one of the preceding claims, ***characterised in that*** the reservoir (73, 74) is pressurised.

14. The microreactor system according to any one of the preceding claims, ***characterised in that*** a plurality of reservoirs (73, 74) open out into the reaction chamber.

15. The microreactor system according to any one of the preceding claims, ***characterised in that*** the reaction chamber is covered with a gas-permeable cover (102).

16. The microreactor system according to any one of the preceding claims, ***characterised in that*** the valve (24, 25, 26, 27) is connected upstream of a multiplicity of further valves (28, 29, 30, 31) and is used for multiplexing.

17. The microreactor system according to any one of the preceding claims, ***characterised in that*** it consists of an actuator-like connection strip (49), a microtiter plate (71) and a tensioning device (100).

18. Use of a microreactor system according to any one of the preceding claims for opening and closing connections between reactors (77) of a microreactor array.

## Revendications

1. Système de microréacteur pourvu d'une membrane (5) imperméable au gaz et souple et d'un passage (2) vers une chambre de réaction ou un réacteur, qui est entouré d'une surface (12), qui avec la membrane (5) forme un conduit à fluide (13), la membrane (5) comportant une face place dirigée vers le passage (2) et la surface (12) comportant une élévation annulaire (7) qui est placée autour du passage (2), pour former avec une sortie (3) une soupape (60), ***caractérisé en ce que*** l'élévation (7) est de forme annulaire, avec une surface curviligne (15), faisant office de joint linéaire.

2. Système de microréacteur selon la revendication 1, ***caractérisé en ce que*** le passage (2) comporte un creux conçu sous la forme d'un segment sphérique (9).

3. Système de microréacteur selon l'une quelconque des revendications précédentes, ***caractérisé en ce qu'***il comporte un réseau de microréacteurs (16) qui est recouvert par une membrane (23), au moins un passage (19) menant chacun vers au moins un réacteur.

4. Système de microréacteur selon l'une quelconque des revendications précédentes, ***caractérisé en ce que*** le passage (19) est placé entre deux canaux (20, 21).

5. Système de microréacteur selon l'une quelconque des revendications précédentes, ***caractérisé en ce que*** des canaux de réacteur (20, 21) et au moins un passage (19) sont placés dans une plaque (22) à structure micro-fluidique.

6. Système de microréacteur selon l'une quelconque des revendications précédentes, ***caractérisé en ce qu'***il comporte un ensemble d'actionneurs (49) qui dans la zone du passage (22), agit sur la membrane (23).

7. Système de microréacteur selon l'une quelconque des revendications précédentes, ***caractérisé en ce qu'***un système pneumatique (90) agit dans la zone des orifices sur la membrane (23).

8. Système de microréacteur selon l'une quelconque des revendications précédentes, ***caractérisé en ce que*** plusieurs passages (2) sont placés de telle sorte qu'ils permettent une fonction de pompage **en ce qu'**une chambre de pompage (43) est placée entre une soupape d'admission (42) et une soupape d'échappement (45 à 48).

9. Système de microréacteur selon l'une quelconque des revendications précédentes, ***caractérisé en ce que*** les canaux qui débouchent sur la soupape (60) se situent dans plusieurs niveaux.

10. Système de microréacteur selon l'une quelconque des revendications précédentes, ***caractérisé en ce que*** plusieurs soupapes (60) sont interconnectées.

11. Système de microréacteur selon l'une quelconque des revendications précédentes, ***caractérisé en ce que*** le système est réalisé en matières optiquement transparentes.

12. Système de microréacteur selon l'une quelconque des revendications précédentes, ***caractérisé en ce que*** la soupape (106) relie un réservoir (73, 74) et un récipient de réaction (77).

13. Système de microréacteur selon l'une quelconque des revendications précédentes, ***caractérisé en ce que*** le réservoir (73, 74) est soumis à une pression.

14. Système de microréacteur selon l'une quelconque des revendications précédentes, ***caractérisé en ce que*** plusieurs réservoirs (73, 74) débouchent dans la chambre de réaction.

15. Système de microréacteur selon l'une quelconque des revendications précédentes, ***caractérisé en ce que*** la chambre de réaction est recouverte d'un couvercle (102) perméable aux gaz.

16. Système de microréacteur selon l'une quelconque des revendications précédentes, ***caractérisé en ce que*** la soupape (24, 25, 26'. 27) est connectée par une pluralité de soupapes (28, 29, 30, 31) additionnelles et utilisée pour le multiplexage.

17. Système de microréacteur selon l'une quelconque des revendications précédentes, ***caractérisé en ce qu'***il est constitué d'un bomier (49) actorique, d'une plaque de micro-titrage (71) et d'un dispositif de serrage (100).

18. Utilisation d'un système de microréacteur selon l'une quelconque des revendications précédentes, pour ouvrir et fermer des liaisons entre des réacteurs (77) d'un réseau de microréacteurs.
